# EUROPÄISCHE PATENTSCHRIFT

(11) **EP 0 803 405 B1**
(45) Veröffentlichungstag und Bekanntmachung des Hinweises auf die Patenterteilung: **19.06.2002**
(21) Anmeldenummer: 97106035.5
(22) Anmeldetag: 12.04.1997
(51) Int. Cl.: B60R 16/02

(54) **Baugruppe mit elektrischem Schalter**
Construction unit with an electric switch
Unité d'assemblage avec interrupteur électrique

(30) Priorität: 24.04.1996 DE 19616249
(43) Veröffentlichungstag der Anmeldung: 29.10.1997
(73) Patentinhaber: Marquardt GmbH, 78604 Rietheim-Weilheim (DE)
(72) Erfinder: Kramer, Markus, 78546 Spaichingen (DE)
(74) Vertreter: Patentanwälte Eisele, Otten, Roth & Dobler

(56) Entgegenhaltungen:
- DE-A- 4 221 458
- DE-A- 4 430 700
- DE-U- 9 213 371
- DE-U- 9 406 697

## Beschreibung

Die Erfindung betrifft eine Baugruppe mit einem Gehäuse, insbesondere eine elektrische und/oder elektronische und/oder mechanische Baugruppe, nach dem Oberbegriff des Patentanspruchs 1.

Elektrische oder elektronische sowie gegebenenfalls mit mechanischen Elementen ausgestattete Baugruppen mit einem Gehäuse werden beispielsweise in Kraftfahrzeugen eingesetzt. Bei einer derartigen Baugruppe kann sich um ein in der Nähe des Lenkrades befindliches Lenkradschloß, ein Zündschloß, eine in der Autotür befindliche Schloßbaugruppe für die Zentralverriegelung o. dgl. handeln. Zur Feststellung der Schloßstellung, Verriegelungs- bzw. Entriegelungsstellung o. dgl. befinden sich in der Baugruppe elektrische Schalter, deren Schaltsignal die entsprechende Stellung codiert.

Bei den elektrischen Schaltern in der Baugruppe handelt es sich im allgemeinen um Schnapp- oder Mikroschalter, die mit einem eigenen Schaltergehäuse versehen sind. Diese Schalter sind innerhalb des Gehäuses der Baugruppe angeordnet und werden über bewegbare Stellelemente betätigt, die auf das Betätigungsorgan des Schalters einwirken. Häufig befinden sich Stellelemente außerhalb des Gehäuses, so daß an das Stellelement weitere Übertragungselemente angelenkt sind, wobei eines dieser Übertragungselemente wiederum über eine in einer Gehäusewand angebrachte Öffnung in das Gehäuse zur Betätigung des Schalters geführt ist.

Es ist unmittelbar ersichtlich, daß eine derartige Anordnung von zusätzlichen Übertragungselementen aufwendig und fehleranfällig ist. Häufig muß das Innere des Gehäuses vor Einwirkung von Feuchtigkeit, Staub o. dgl. geschützt sein, so daß zwischen der Öffnung im Gehäuse und den bewegbaren Übertragungselementen zusätzlich Abdichtungen erforderlich sind. Es hat sich gezeigt, daß trotz dieser Abdichtungen das Eindringen von derartigen Schadstoffen in das Gehäuse nicht völlig eliminiert werden kann. Dadurch besteht die Gefahr, daß die Baugruppe vorzeitig ausfällt.

Aus der DE 92 13 371 U1 ist eine Baugruppe mit einem Gehäuse bekannt, das eine Kammer mit einem darin angeordneten Schalter enthält. Der ein Schaltergehäuse aufweisende Schalter besitzt ein Betätigungsorgan, das zur Betätigung des Schalters über einen mit dem Betätigungorgan in Wirkverbindung stehenden Betätigungsstößel durch eine Öffnung in der Gehäusewand des Gehäuses reicht. Zur Abdichtung der Kammer im Gehäuses ist eine Schutzkappe am Betätigungsstößel und der Gehäusewand derart befestigt, daß die Schutzkappe die Öffnung überdeckt. Somit ist das Betätigungsorgan des Schalters in komplexer Art, aus mehreren Elementen bestehend ausgestaltet. Außerdem ist auch bei dieser Baugruppe eine aufwendige Abdichtung der Öffnung in der Gehäusewand notwendig.

Der Erfindung liegt die Aufgabe zugrunde, die Betätigung eines im Gehäuse der Baugruppe befindlichen elektrischen Schalters durch ein außerhalb des Gehäuses angeordnetes Stellelement zu vereinfachen, insbesondere eine gute Abdichtung an der Öffnung in das Gehäuse mit einfachen Mitteln zu erzielen.

Diese Aufgabe wird bei einer gattungsgemäßen Baugruppe durch die kennzeichnenden Merkmale des Anspruchs 1 gelöst.

Weitere Ausgestaltungen der Erfindung sind Gegenstand der Unteransprüche.

Bevorzugterweise handelt es sich bei dem Schalter im Gehäuse der Baugruppe um einen Schnapp- oder Mikroschalter mit einem als linear beweglichen Stößel ausgebildeten Betätigungsorgan. Am Stößel ist eine in der Art eines Balgs ausgestaltete Dichtungskappe angebracht, die mittels eines Kragens am Schaltergehäuse durch eine Rollierung befestigt sein kann. Ein Teil des Kragens bildet die Fläche des Schaltergehäuses, die an der die Öffnung umgebenden Fläche der Gehäusewand anliegt. Bei dieser die Öffnung umgebenden Fläche der Gehäusewand handelt es sich um den Rand der Öffnung in der Gehäusewand.

Die Außenfläche des Kragens ist in der Art eines Kegelstumpfes schräg verlaufend ausgebildet während die Öffnung einen ungefähr kreisförmigen Querschnitt besitzt. Die Öffnung weist einen Durchmesser auf, der etwas geringer als der größte Außendurchmesser des Kragens ist. Dadurch liegt dann der Kragen mit einem Anpreßdruck an der die Öffnung rings umgebenden Fläche der Gehäusewand an, wobei insbesondere an dieser Fläche keine zusätzliche Dichtungsmittel benötigt werden.

In weiterer Ausbildung kann die die Öffnung umgebende Fläche mit einem in das Innere des Gehäuses reichenden Ansatz an der Gehäusewand zur Vergrößerung der Dichtfläche verlängert sein. Gegebenenfalls kann der Ansatz zusätzlich mit seiner Stirnfläche an der zur Bewegungsrichtung des Stößels ungefähr senkrecht stehenden Fläche des Schaltergehäuses anliegen. Falls gewünscht kann sich dann zwischen der Stirnfläche des Ansatzes und dieser Fläche des Schaltergehäuses noch ein elastisches Dichtelement befinden.

Im Gehäuse befindet sich eine Halterung für den Schalter. In diese Halterung ist das Schaltergehäuse bevorzugterweise eingerastet, indem am Schaltergehäuse befindliche Haltezapfen in korrespondierende, Rast- oder Schnapphaken besitzende Rastaufnahmen eingreifen. Die Rastaufnahme für den Haltezapfen kann aus jeweils zwei, in etwa dreiecksförmigen, mit ihrer Spitze einander gegenüberliegenden Rast- oder Schnapphaken und einem in etwa halbkreisförmigen Anschlag ausgebildet sein.

Als Montagehilfe für den Schalter befindet sich an der Halterung für das Schaltergehäuse eine in der Art einer Rippe ausgebildete Einführschräge. Bei der Montage wird dann das Schaltergehäuse so an die Einführschräge angelegt, daß das Betätigungsorgan die Öffnung im Gehäuse durchsetzt. Durch Druckeinwirkung gleitet anschließend das Schaltergehäuse entlang der Einführschräge, wobei der Haltezapfen nach Überwindung eines Art von Druckpunkts zwischen den Spitzen der Rast- oder Schnapphaken in der Rastaufnahme durch den Anschlag und die beiden Rast- oder Schnapphaken festgelegt ist.

Ist noch eine weitere Verbesserung der Abdichtung der Öffnung, insbesondere als Schutz gegen Spritzwasser o. dgl., notwendig, so kann nach der Montage das Schaltergehäuse an der Halterung wenigstens im Bereich der Öffnung mit einer Vergußmasse ausgegossen werden.

Die mit der Erfindung erzielten Vorteile bestehen insbesondere darin, daß auf ein von außerhalb in das Gehäuse führendes, zusätzliches Übertragungselement für die Betätigung des Schalters sowie sonstige Bewegungs- und Rückstellelemente verzichtet werden kann. Vielmehr wird der Schalter direkt von dem außerhalb des Gehäuses befindlichen Stellelement betätigt. Dadurch erhält man einen einfacheren und somit auch kostengünstigeren Aufbau der Baugruppe, die zudem einfacher zu montieren ist.

Der Schalter kann mit geringen Toleranzen im Gehäuse einrastbar angeordnet werden, was wiederum die Montagefreundlichkeit steigert.

Zudem ergibt sich der weitere Vorteil, daß die Positionierund die Abfrage-Genauigkeit für die Betätigung des Schalters, insbesondere durch die Selbstzentrierung in der Rastaufnahme, ohne Vergrößerung des Aufwandes gesteigert wird.

Weiter wird eine gute Abdichtung des Gehäuseinneren der Baugruppe gegen das Eindringen von Feuchtigkeit, Wasser, Staub, Abgasen o. dgl. erzielt, ohne daß zusätzliche Abdichtmittel notwendig sind. Dies führt wiederum zu Kosteneinsparungen sowie trägt darüber hinaus zur Erhöhung der Funktionssicherheit der Baugruppe bei.

Ein Ausführungsbeispiel der Erfindung ist in den Zeichnungen dargestellt und wird im folgenden näher beschrieben. Es zeigen
- Fig. 1: einen Schnitt durch ein Gehäuse, beispielsweise für eine Schloßbaugruppe einer Zentralverriegelung in einem Kraftfahrzeug,
- Fig. 2: einen Schnitt entlang der Linie 2-2 aus Fig. 1,
- Fig. 3: einen Ausschnitt gemäß Detail III aus Fig. 1 in vergrößerter Darstellung,
- Fig. 4: das Gehäuse wie in Fig. 1, jedoch ohne elektrische Bauteile,
- Fig. 5: eine Seitenansicht eines elektrischen Schalters und
- Fig. 6: einen Schnitt durch den elektrischen Schalter gemäß Linie 6-6 aus Fig. 5

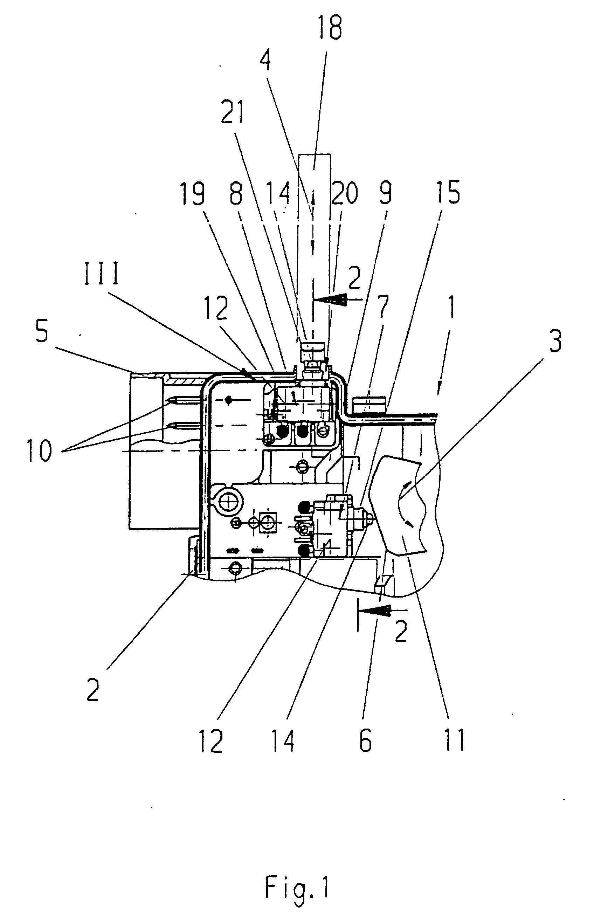

In Fig. 1 ist eine in der Art eines Elektrokomponenten-Trägers ausgbildete Baugruppe 1 gezeigt, die in einem Gehäuse 2 angeordnet ist. Bei dieser Baugruppe handelt es sich beispielsweise um eine Schloßbaugruppe für eine Zentralverriegelung, die in der Türe eines Kraftfahrzeugs eingesetzt wird.

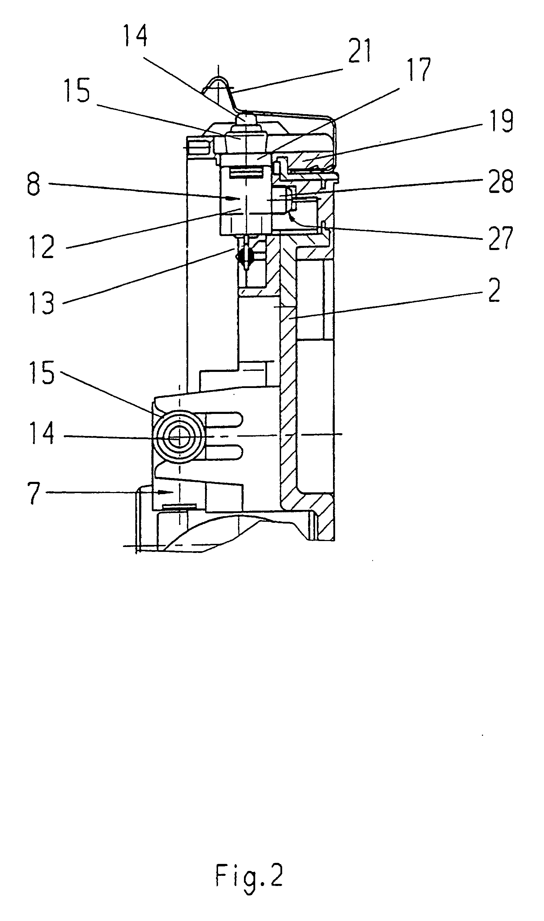

Im Gehäuse 2 befinden sich verschiedene mechanische, elektrische und elektronische Bauelemente, die jedoch für die eigentliche Erfindung nicht weiter relevant sind und daher nicht näher gezeigt sind. Unter anderem kann im Gehäuse 2 ein Antrieb für den Verriegelungsknopf der Zentralverriegelung in der Autotüre angeordnet sein, wobei zur Feststellung der verriegelten oder entriegelten Stellung des Verriegelungsknopfes ein im Inneren des Gehäuses 2 befindlicher elektrischer Schalter 7 dient. Der Schalter 7 wird mittels einer Schräge 6 an einem mit dem Verriegelungsknopf in Wirkverbindung stehenden, lediglich schematisch angedeuteten Stellhebel 11, der gemäß dem Pfeil 3 beweglich ist, in einer der beiden Stellungen des Verriegelungsknopfes betätigt, so daß das vom Schalter 7 abgegebene Schaltsignal die entsprechende Stellung des Verriegelungsknopfes codiert. Im Inneren des Gehäuses 2 befindet sich noch ein weiterer elektrischer Schalter 8. Dieser Schalter 8 dient zur Abfrage der Stellung, in der sich eine Drehfalle am Schloß der Autotüre befindet. Der Schalter 8 wird von einem außerhalb des Gehäuses 2 befindlichen, mit der Drehfalle in Wirkverbindung stehenden und gemäß dem Pfeil 4 bewegbaren Stellelement 18, das in Fig. 1 ebenfalls lediglich schematisch angedeutet ist, über eine in einer Gehäusewand 19 des Gehäuses 2 angebrachte Öffnung 20 betätigt. Hierzu wirkt das Stellelement 18 über einen am Gehäuse 2 befestigten, insbesondere in der Fig. 2 näher zu sehenden Federhebel 21 auf den Schalter 8 ein.

Die elektrische Verbindung zwischen den Schaltern 7, 8 und den sonstigen elektrischen sowie den elektronischen Bauteilen wird durch Leitungen 9 im Inneren des Gehäuses 2 hergestellt. Die Leitungen 9 führen weiter zu elektrischen Anschlüssen 10, die aus dem Gehäuse 2 ragen und zum Schutz von einem Gehäuseansatz 5 umgeben sind. Die Anschlüsse 10 dienen zur elektrischen Verbindung der Baugruppe mit weiteren Komponenten des Kraftfahrzeugs.

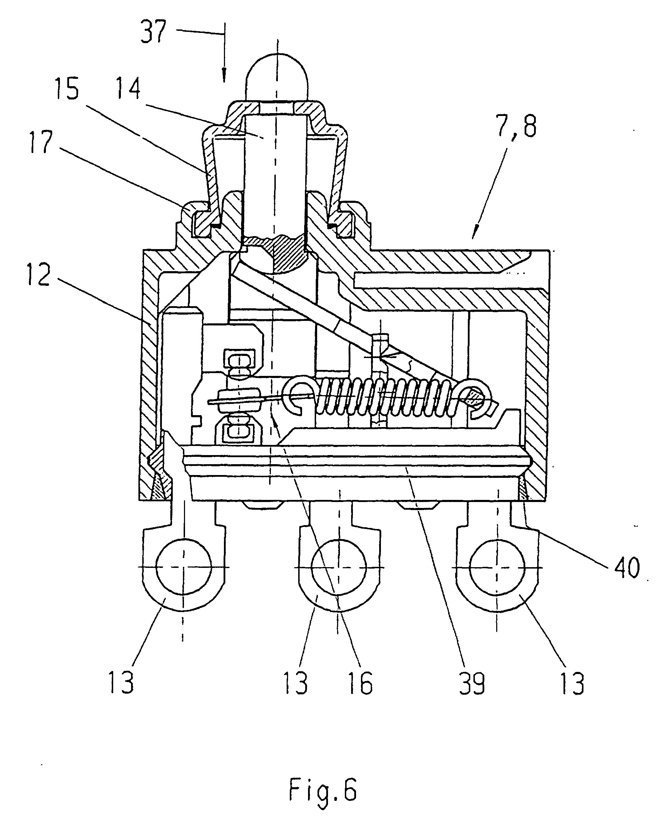

Bei den elektrischen Schaltern 7, 8 handelt es sich um an sich bekannte Schnapp- oder Mikroschalter. Beispielhaft ist eine Ausführung für einen derartigen Schalter in Fig. 6 im Schnitt näher zu sehen. Der Schalter 7, 8 besitzt ein eigenes Schaltergehäuse 12.

Im Schaltergehäuse 12 befindet sich das Kontaktsystem 16, das über Anschlüsse 13, beispielsweise Lötanschlüsse, mit den in Fig. 1 gezeigten Leitungen 9 elektrisch verbunden ist. Das Kontaktsystem 16 des Schalters 7, 8 wird mittels eines in das Schaltergehäuse 12 führenden Betätigungsorgans 14, das als linear, in Richtung gemäß dem Pfeil 37 beweglicher Stößel ausgebildet ist, geschaltet. Das Schaltergehäuse 12 des Schalters 7, 8 ist bevorzugterweise in sich wasser- und staubdicht ausgebildet. Dazu ist am Schaltergehäuse 12 im Bereich des Betätigungsorgans 14 eine in der Art eines Balgs ausgestaltete Dichtungskappe 15 angebracht. Die Dichtungskappe 15 kann mittels eines Kragens 17 am Schaltergehäuse 12 beispielsweise durch eine Rollierung befestigt sein. An der dem Betätigungsorgan 14 gegenüberliegenden Seite ist ein Sockel 39 in das Schaltergehäuse 12 eingesetzt, wobei der Spalt zwischen dem Sockel 39 und dem Schaltergehäuse 12 zusätzlich mittels einer Vergußmasse 40 abgedichtet sein kann.

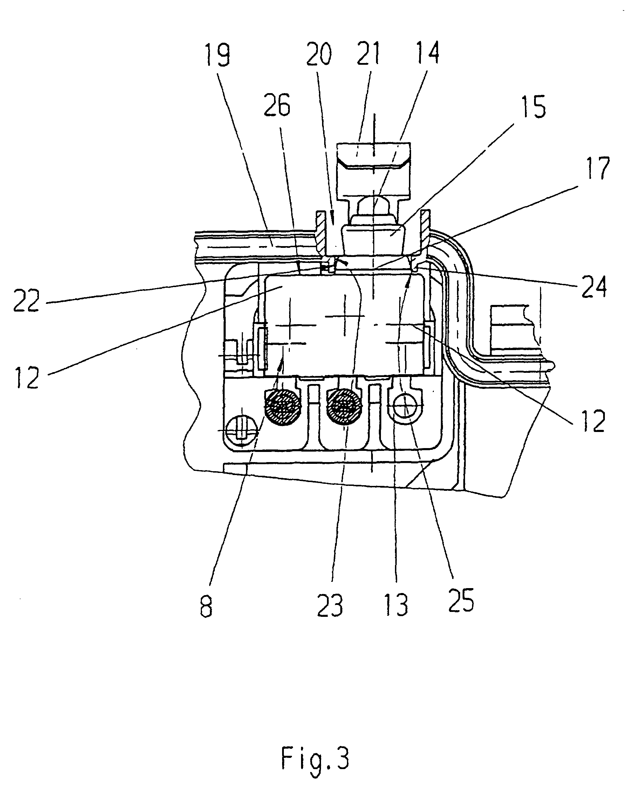

Gemäß der Fig. 1 ist der weitere Schalter 8 im Bereich der Gehäusewand 19 in der Nähe der Öffnung 20 angeordnet und zwar derart, daß das Betätigungsorgan 14 die Öffnung 20 in der Gehäusewand 19 durchsetzt. Wie näher aus Fig. 3 hervorgeht, liegt der Schalter 8 mit einer dem Betätigungsorgan 14 zugeordneten Fläche 22 des Schaltergehäuses 12 an wenigstens einem Teil der die Öffnung 20 umgebenden Fläche 23 der Gehäusewand 19 direkt an. Zweckmäßiger Weise wird die Fläche 22 des Schaltergehäuses 12 von einem Teil des Kragens 17 gebildet. Bei der Fläche 23 der Gehäusewand 19 handelt es sich um den ringsumlaufenden Rand der Öffnung 20 in der Gehäusewand 19. Durch diese Ausbildung, bei der der Kragen 17 ringsum an der Gehäusewand 19 in der Öffnung 20 anliegt, wird eine Abdichtung der Öffnung 20 mittels des Schalters 8 selbst erzielt, ohne daß weitere Dichtmittel notwendig sind, so daß das Eindringen von Feuchtigkeit, Staub o. dgl. in das Innere des Gehäuses 2 an der Öffnung 20 wirksam verhindert ist. Im übrigen sind derartige Einwirkungen auf den Schalter 8 selbst ebenfalls ausgeschlossen, da dieser im Bereich des Betätigungsorgans 14 mit der Dichtungskappe 15 versehen ist.

In einer Weiterbildung der Erfindung ist die Außenfläche des Kragens 17 schräg verlaufend, ungefähr in der Art eines Kegelstumpfes, ausgebildet. Die Öffnung 20 besitzt einen ungefähr kreisförmigen Querschnitt, der zum Kragen 17 korrespondiert. Bevorzugterweise weist die Öffnung 20 einen etwas geringeren Durchmesser als der größte Außendurchmesser des Kragens 17 auf, wodurch die Fläche 22 am Kragen 17 mit einem gewissen Anpreßdruck an der die Öffnung 20 rings umgebenden Fläche 23 der Gehäusewand 19 anliegt. Somit wird eine besonders gute Abdichtung erzielt, obwohl die Fläche 22 am Kragen 17 direkt an dieser Fläche 23 ohne zusätzliche Dichtungsmittel anliegt.

Wie man weiter aus Fig. 3 entnimmt, kann die die Öffnung 20 umgebende Fläche 23 mit einem in das Innere des Gehäuses 2 reichenden Ansatz 24 an der Gehäusewand 19 verlängert sein. Dadurch wird eine vergrößerte Dichtfläche in der Öffnung 20 geschaffen. Gegebenenfalls kann der Ansatz 24 zusätzlich mit seiner Stirnfläche 25 an der Fläche 26 des Schaltergehäuses 12, die zur Bewegungsrichtung des Betätigungsorgans 14 gemäß dem Pfeil 37 aus Fig. 6 ungefähr senkrecht steht, anliegen.

Falls gewünscht kann dann zwischen der Stirnfläche 25 und der Fläche 26 noch zusätzlich ein nicht weiter gezeigtes, elastisches Dichtelement angeordnet sein.

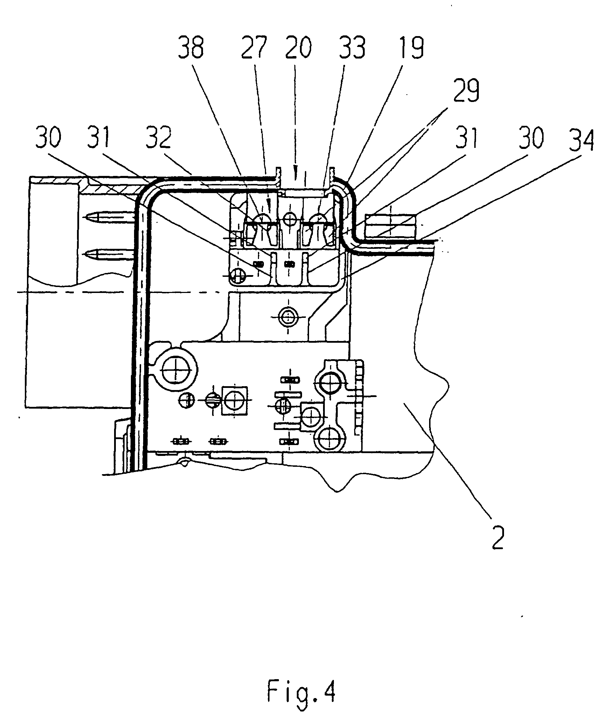

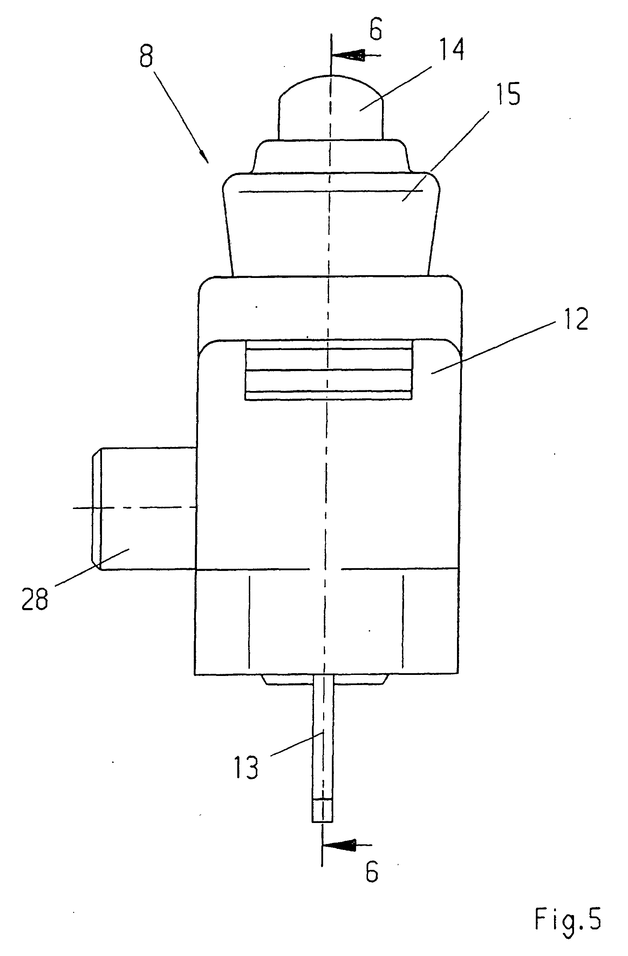

Der elektrische Schalter 8 besitzt an einer Seite des Schaltergehäuses 12 befindliche Haltezapfen 28, wie in Fig. 5 zu sehen ist. In vorliegendem Ausführungsbeispiel besitzt der Schalter 8 zwei derartige Haltezapfen 28. An diesen Haltezapfen 28 ist der Schalter 8 in einer näher in Fig. 4 gezeigten Halterung 27 im Gehäuse 2 aufgenommen. Die Halterung 27 besitzt zu den Haltezapfen 28 korrespondierende Rastaufnahmen 38. Bevorzugterweise ist die Rastaufnahme 38 für den Haltezapfen 28 aus jeweils zwei, in etwa dreiecksförmigen, mit ihrer Spitze 32 einander gegenüberliegenden Rast- oder Schnapphaken 29 und einem in etwa halbkreisförmigen Anschlag 33 ausgebildet. Das Schaltergehäuse 12 ist in der Halterung 27 positionsgerecht eingerastet, indem die beiden Haltezapfen 28 in die jeweiligen Rastaufnahmen 38 eingreifen.

Um eine einfache Montage des Schalters 8 im Gehäuse 2 zu ermöglichen, sind an der Halterung 27 für das Schaltergehäuse 12 in der Art von Rippen 30 ausgebildete Einführschrägen 31 angebracht. Zur Montage wird dann das Schaltergehäuse 12 so an die Einführschräge 31 angelegt, daß das Betätigungsorgan 14 die Öffnung 20 im Gehäuse 2 durchsetzt. Anschließend gleitet der Schalter 8 durch Druckeinwirkung auf das Schaltergehäuse 12 entlang der Einführschräge 31, wobei der Haltezapfen 28 nach Überwindung eines Art von Druckpunkts zwischen den Spitzen 32 der Rast- oder Schnapphaken 29 in der Rastaufnahme 38 durch den Anschlag 33 und die beiden Rastoder Schnapphaken 29 festgelegt ist.

In einer weiteren Ausbildung der Erfindung kann ein Rand 34 entlang der Halterung 27 angebracht sein. Nachdem der Schalter 8 in die Halterung 27 eingesetzt und die elektrische Verbindung der Anschlüsse 13 mit den Leitungen 9 hergestellt ist, kann dann das Schaltergehäuse 12 innerhalb des Bereichs, der durch den Rand 34 begrenzt ist, mit einer Vergußmasse versehen werden. Es kann dabei auch genügen, daß die Vergußmasse wenigstens im Bereich der Öffnung 20 an der Halterung 27 angebracht wird. Bevorzugterweise sind die Öffnung 20 und der Kragen 17 am Schaltergehäuse 12 derart dimensioniert, daß die Vergußmasse aufgrund von Kapillarkräften in den Spalt zwischen der Gehäusewand 19 und dem Kragen 17 eindringen und dort aushärten kann. Dadurch kann die Abdichtung der Öffnung 20 im Gehäuse 2 gegenüber der Außenseite noch weiter verbessert werden.

Die Erfindung ist nicht auf das beschriebene und dargestellte Ausführungsbeispiel beschränkt. Sie umfaßt vielmehr auch alle fachmännischen Weiterbildungen im Rahmen des Erfindungsgedankens. So kann die Erfindung nicht nur in Kraftfahrzeugen sondern auch an sonstigen Vorrichtungen Verwendung finden, bei denen eine Baugruppe in einem Gehäuse einen Schalter enthält, der von einem außerhalb des Gehäuses befindlichen Stellmittel betätigt wird bzw. der auf einfache Weise positionsgerecht im Gehäuse zu befestigen ist. Beispielsweise kann es sich hierbei um Baugruppen für elektrische Haushaltsgeräte, Werkzeugmaschinen o. dgl. handeln.

### Bezugszeichen-Liste:

- 1:: Baugruppe
- 2:: Gehäuse
- 3:: Pfeil (Bewegungsrichtung von Stellhebel)
- 4:: Pfeil (Bewegungsrichtung von Stellelement)
- 5:: Gehäuseansatz
- 6:: Schräge (an Stellhebel)
- 7,8:: elektrischer Schalter
- 9:: Leitung
- 10:: elektrischer Anschluß (von Baugruppe)
- 11:: Stellhebel
- 12:: Schaltergehäuse
- 13:: Anschluß (von Schalter)
- 14:: Betätigungsorgan (von Schalter)
- 15:: Dichtungskappe
- 16:: Kontaktsystem
- 17:: Kragen
- 18:: Stellelement
- 19:: Gehäusewand
- 20:: Öffnung
- 21:: Federhebel
- 22:: Fläche (an Schalter)
- 23:: Fläche (um Öffnung in der Gehäusewand)
- 24:: Ansatz
- 25:: Stirnfläche
- 26:: Fläche (an Schaltergehäuse)
- 27:: Halterung
- 28:: Haltezapfen (an Schaltergehäuse)
- 29:: Rast- oder Schnapphaken
- 30:: Rippe
- 31:: Einführschräge
- 32:: Spitze (von Rasthaken)
- 33:: Anschlag
- 34:: Rand
- 37:: Pfeil (Bewegungsrichtung von Betätigungsorgan)
- 38:: Rastaufnahme
- 39:: Sockel
- 40:: Vergußmasse

## Patentansprüche

1. Baugruppe mit einem Gehäuse (2), insbesondere elektrische und/oder elektronische und/oder mechanische Baugruppe (1), wie ein Lenkradschloß, ein Zündschloß, ein Türschloß o. dgl. in einem Kraftfahrzeug, wobei eine Öffnung (20) in einer Gehäusewand (19) des Gehäuses (2) angebracht ist, wobei innerhalb des Gehäuses (2) ein Schalter (8) mit einem Schaltergehäuse (12) derart im Bereich der Gehäusewand (19) angeordnet ist, daß das Betätigungsorgan (14) des Schalters (8) die Öffnung (20) in der Gehäusewand (19) durchsetzt, wodurch das Betätigungsorgan (14) von einem außerhalb des Gehäuses (2) befindlichen, bewegbaren Stellelement (18) über die Öffnung (20) betätigbar ist, **dadurch gekennzeichnet, daß** der Schalter (8) mit einer dem Betätigungsorgan (14) zugeordneten Fläche (22) des Schaltergehäuses (12) an wenigstens einem Teil der die Öffnung (20) rings umgebenden Fläche (23) der Gehäusewand (19) anliegt, wobei die Fläche (22) des Schaltergehäuses (12) direkt an der Fläche (23) der Gehäusewand (19) ohne zusätzliche Dichtungsmittel anliegt.

2. Baugruppe nach Anspruch 1, **dadurch gekennzeichnet, daß** es sich bei dem Schalter (8) um einen Schnapp- oder Mikroschalter mit einem als linear beweglichen Stößel ausgebildeten Betätigungsorgan (14) handelt, wobei vorzugsweise am Betätigungsorgan (14) eine in der Art eines Balgs ausgestaltete Dichtungskappe (15) angebracht ist, die insbesondere mittels eines Kragens (17) am Schaltergehäuse (12) durch eine Rollierung o. dgl. befestigt ist, und wobei weiter vorzugsweise ein Teil des Kragens (17) die Fläche (22) des Schaltergehäuses (12) bildet, die an der die Öffnung (20) umgebenden Fläche (23) der Gehäusewand (19) anliegt.

3. Baugruppe nach Anspruch 2, **dadurch gekennzeichnet, daß** die Außenfläche des Kragens (17) schräg verlaufend, insbesondere ungefähr in der Art eines Kegelstumpfes, ausgebildet ist, daß vorzugsweise die Öffnung (20) einen ungefähr kreisförmigen Querschnitt besitzt, und daß weiter vorzugsweise die Öffnung (20) einen etwas geringeren
Durchmesser als der größte Außendurchmesser des Kragens (17) aufweist, so daß der Kragen (17) mit einem Anpreßdruck an der die Öffnung (20) rings umgebenden Fläche (23) der Gehäusewand (19) anliegt.

4. Baugruppe nach Anspruch 1, 2 oder 3, **dadurch gekennzeichnet, daß** es sich bei der die Öffnung (20) umgebenden Fläche (23) um deren Rand in der Gehäusewand (19) handelt, daß vorzugsweise die die Öffnung (20) umgebende Fläche (23) mit einem in das Innere des Gehäuses (2) reichenden Ansatz (24) an der Gehäusewand (19) verlängert ist, und daß weiter vorzugsweise der Ansatz (24) mit seiner Stirnfläche (25) an der zur Bewegungsrichtung (37) des Betätigungsorgans (14) ungefähr senkrecht stehenden Fläche (26) des Schaltergehäuses (12) anliegt, wobei gegebenenfalls zwischen der Stirnfläche (25) und dieser Fläche (26) des Schaltergehäuses (12) ein elastisches Dichtelement befindlich ist.

5. Baugruppe nach einem der Ansprüche 1 bis 4, **dadurch gekennzeichnet, daß** eine Halterung (27) im Gehäuse (2) zur Aufnahme des Schalters (8) befindlich ist, wobei das Schaltergehäuse (12) vorzugsweise in der Halterung (27) eingerastet ist, indem insbesondere Haltezapfen (28) am Schaltergehäuse (12) befindlich sind, die in korrespondierende Rastaufnahmen (38) an der Halterung (27) eingreifen.

6. Baugruppe nach Anspruch 5, **dadurch gekennzeichnet, daß** an der Halterung (27) für das Schaltergehäuse (12) eine in der Art einer Rippe (30) ausgebildete Einführschräge (31) befindlich ist, daß vorzugsweise die Rastaufnahme (38) für den Haltezapfen (28) aus jeweils zwei, insbesondere in etwa dreiecksförmigen, mit ihrer Spitze (32) einander gegenüberliegenden Rast- oder Schnapphaken (29) und einem in etwa halbkreisförmigen Anschlag (33) ausgebildet ist, derart daß bei der Montage das Schaltergehäuse (12) so an die Einführschräge (31) angelegt wird, daß das Betätigungsorgan (14) die Öffnung (20) im Gehäuse (2) durchsetzt und anschließend durch Druckeinwirkung das Schaltergehäuse (12) entlang der Einführschräge (31) gleitet, wobei der Haltezapfen (28) nach Überwindung eines Art von Druckpunkts zwischen den Spitzen (32) der Rast- oder Schnapphaken (29) in der Rastaufnahme (38) durch den Anschlag (33) und die beiden Rast- oder Schnapphaken (29) festgelegt ist.

7. Baugruppe nach einem der Ansprüche 1 bis 6, **dadurch gekennzeichnet, daß** das Schaltergehäuse (12) an der Halterung (27) wenigstens im Bereich der Öffnung (20) mit einer Vergußmasse versehen ist.

## Claims

1. Module with a housing (2), in particular electric and/or electronic and/or mechanical module (1), such as a steering wheel lock, an ignition lock, a door lock or the like in a motor vehicle, an aperture (20) being applied in a housing wall (19) of the housing (2), a switch (8) with a switch housing (12) being arranged inside the housing (2) in the region of the housing wall (19) in such a way that the actuating member (14) of the switch (8) penetrates the aperture (20) in the housing wall (19), so the actuating member (14) can be actuated by a moving adjusting element (18) located outside the housing (2) over the aperture (20), **characterised in that** the switch (8) with a face (22) of the switch housing (12) associated with the actuating member (14) adjoins at least a part of the face (23) of the housing wall (19) surrounding the aperture (20), the face (22) of the switch housing (12) directly adjoining the face (23) of the housing wall (19) without additional sealing means.

2. Module according to claim 1, **characterised in that** the switch (8) is a sensitive switch or microswitch with an actuating member (14) formed as a linearly moving plunger, a sealing cap (15) designed in the manner of a bellows preferably being attached to the actuating member (14) and being fastened in particular by means of a collar (17) on the switch housing (12) by rolling or the like, and a part of the collar (17) preferably forming the face (22) of the switch housing (12) adjoining the face (23) of the housing wall (19) surrounding the aperture (20).

3. Module according to claim 2, **characterised in that** the outer face of the collar (17) is designed so as to extend obliquely, in particular approximately in the manner of a truncated cone, **in that** the aperture (20) preferably has an approximately circular cross-section and **in that** the aperture (20) also preferably has a slightly smaller diameter than the largest external diameter of the collar (17), so the collar (17) adjoins the face (23) of the housing wall (19) surrounding the aperture (20) with an application pressure.

4. Module according to claim 1, 2 or 3, **characterised in that** the face (23) surrounding the aperture (20) is the edge thereof in the housing wall (19), **in that** the face (23) surrounding the aperture (20) is preferably extended by a lug (24) on the housing wall (19) extending into the interior of the housing (2), and **in that** the lug (24) with its end face (25) also preferably adjoins the face (26) of the switch housing (12) located approximately perpendicular to the direction of movement (37) of the actuating member (14), a resilient sealing element optionally being located between the end face (25) and this face (26) of the switch housing (12).

5. Module according to any of claims 1 to 4, **characterised in that** a holding device (27) is located in the housing (2) to receive the switch (8), the switch housing (12) preferably being latched in the holding device (27) **in that** in particular holding pins (28) engaging in corresponding latching mounts (38) on the holding device (27) are located on the switch housing (12).

6. Module according to claim 5, **characterised in that** a pilot bevel (31) designed in the manner of a rib (30) is located on the holding device (27) for the switch housing (12), **in that** the latching mount (38) for the holding pin (28) preferably consists of two respective, in particular approximately triangular, latching or snap-on hooks (29) opposing one another with their vertex (32) and an approximately semi-circular stop (33) in such a way that during assembly the switch housing (12) adjoins the pilot bevel (31) such that the actuating member (14) penetrates the aperture (20) in the housing (2) and subsequently the switch housing (12) slides along the pilot bevel (31) owing to the action of pressure, the holding pin (28) being fixed in the latching mount (38) owing to the stop (33) and the two latching or snap-on hooks (29) after overcoming a type of pressure point between the vertices (32) of the latching or snap-on hooks (29).

7. Module according to any of claims 1 to 6, **characterised in that** on the holding device (27), at least in the region of the aperture (20), the switch housing (12) is provided with a casting compound.

## Revendications

1. Ensemble, comportant un boîtier (2), en particulier ensemble (1) électrique et/ou électronique et/ou mécanique, comme un antivol sur la direction, une serrure de contact, une serrure de porte ou analogue dans un véhicule automobile, une ouverture (20) étant agencée dans une paroi de boîtier (19) du boîtier (2), un commutateur (8) ayant un boîtier de commutateur (12) étant agencé à l'intérieur du boîtier (2) dans la zone de la paroi de boîtier (19), de sorte que l'organe d'actionnement (14) du commutateur (8) traverse l'ouverture (20) dans la paroi de boîtier (19), grâce à quoi d'organe d'actionnement (14) peut être actionné par un élément de réglage (18) mobile se trouvant à l'extérieur du boîtier (2) par l'ouverture (20),
**caractérisé en ce que** le commutateur (8), par une surface (22), associé à l'organe d'actionnement (14), du boîtier de commutateur (12) repose contre au moins une partie de la surface (23), entourant l'ouverture (20), de la paroi de boîtier (19), la surface (22) du boîtier de commutateur (12) reposant directement contre la surface (23) de la paroi de boîtier (19) sans moyen d'étanchéité supplémentaire.

2. Ensemble selon la revendication 1,
**caractérisé en ce que**, concernant le commutateur (8), il s'agit d'un micro-commutateur ou commutateur à enclenchement ayant un organe d'actionnement (14) réalisé comme poussoir linéairement mobile, un capuchon d'étanchéité (15) réalisé à la manière d'un soufflet étant avantageusement agencé sur l'organe d'actionnement (14), lequel est fixé, en particulier au moyen d'un rebord (17), au boîtier de commutateur (12) par un roulement ou analogue, et, encore avantageusement, une partie du rebord (17) formant la surface (22) du boîtier de commutateur (12), qui repose contre la surface (23), entourant l'ouverture (20), de la paroi de boîtier (19).

3. Ensemble selon la revendication 2,
**caractérisé en ce que** la surface externe du rebord (17) est réalisée en s'étendant de façon inclinée, en particulier sensiblement à la manière d'un cône tronqué, **en ce que**, avantageusement, l'ouverture (20) possède une section transversale sensiblement circulaire, et **en ce que**, encore avantageusement, l'ouverture (20) présente un diamètre quelque peu plus faible que le plus grand diamètre externe du rebord (17), de sorte que le rebord (17) repose, avec une pression de pressage, contre la surface (23), entourant l'ouverture (20), de la paroi de boîtier (19).

4. Ensemble selon la revendication 1, 2 ou 3,
**caractérisé en ce que**, concernant la surface (23) entourant l'ouverture (20), il s'agit de son bord dans la paroi de boîtier (19), **en ce que**, avantageusement, la surface (23) entourant l'ouverture (20) est prolongée par une pièce rapportée (24) atteignant l'intérieur du boîtier (2) sur la paroi de boîtier (19), et **en ce que**, encore avantageusement, la pièce rapportée (24), par sa surface frontale (25), repose sur la surface (26) du boîtier de commutateur (12) étant sensiblement perpendiculaire à la direction de déplacement (37) de l'organe d'actionnement (14), un élément d'étanchéité élastique se trouvant le cas échéant entre la surface frontale (25) et cette surface (26) du boîtier de commutateur (12).

5. Ensemble selon une des revendications 1 à 4,
**caractérisé en ce qu'**un support (27) se trouve dans le boîtier (2) pour recevoir le commutateur (8), le boîtier de commutateur (12) étant encliqueté avantageusement dans le support (27), **en ce que**, en particulier, des tourillons de maintien (28) se trouvent sur le boîtier de commutateur (12), qui s'engagent dans des récepteurs d'encliquetage (38) correspondants sur le support (27).

6. Ensemble selon la revendication 5,
**caractérisé en ce que**, sur le support (27) pour le boîtier de commutateur (12), il se trouve un chanfrein d'introduction (31) réalisé à la manière d'une nervure (30), **en ce que**, avantageusement, le récepteur d'encliquetage (38) pour le tourillon de maintien (28) est réalisé, à chaque fois, à partir de deux crochets d'enclenchement ou d'encliquetage (29) opposés l'un à l'autre par leur pointe (32), en particulier sensiblement sous forme triangulaire, et d'une butée (33) sensiblement de forme semi-circulaire, de sorte que, lors du montage, le boîtier de commutateur (12) est appliqué contre le chanfrein d'introduction (31) de sorte que l'organe d'actionnement (14) traverse l'ouverture (20) dans le boîtier (2) et, ensuite, par action de pression, le boîtier de commutateur (12) glisse le long du chanfrein d'introduction (31), le tourillon de maintien (28), après avoir surmonté une sorte de point de pression entre les pointes (32) des crochets d'encliquetage ou d'enclenchement (29) dans le récepteur d'encliquetage (38), étant fixé par la butée (33) et les deux crochets d'encliquetage ou d'enclenchement (29).

7. Ensemble selon une des revendications 1 à 6,
**caractérisé en ce que** le boîtier de commutateur (12) est muni sur le support (27) au moins dans la zone de l'ouverture (20) d'une masse de scellement.
